# EUROPEAN PATENT SPECIFICATION

(11) **EP 2 862 703 B1**
(45) Date of publication and mention of the grant of the patent: **06.03.2019**
(21) Application number: 14189456.8
(22) Date of filing: 17.10.2014
(51) Int. Cl.: B29D 30/52, B60C 11/03, B29D 30/54, B60C 11/00, C08L 21/00

(54) **Method and system for producing a tyre tread with lugs**
Verfahren und System zur Herstellung einer Reifenlauffläche mit Stollen
Procédé et système de production d'une bande de roulement avec des nervures

(30) Priority: 18.10.2013 IT RM20130573
(43) Date of publication of application: 22.04.2015
(73) Proprietor: Bridgestone Europe NV, 1932 Zaventem (BE)
(72) Inventor: Mattocci, Roberto, 00045 GENZANO DI ROMA (IT)
(74) Representative: Marchetti, Alessio

(56) References cited:
- WO-A1-2012/001544
- DE-A1- 1 729 806
- FR-A1- 2 219 000
- GB-A- 658 897
- GB-A- 1 477 317
- US-A- 2 611 411
- US-A- 3 511 291
- US-A- 3 770 038

## Description

### TECHNICAL FIELD

The present invention relates to a method and system for producing a tyre tread with lugs.

The present invention may be used to advantage for producing farm vehicle tyre treads. It is important to note that the term 'farm vehicle tyre' is intended to mean a tyre used on off-road work vehicles, and so refers not only to farm vehicles but also earthmoving machinery or similar.

### BACKGROUND ART

A farm vehicle tyre has a tread with a toroidal base surface that extends about a central axis of rotation; and a number of lugs project radially from the base surface, and extend substantially crosswise to the travelling direction of the tyre.

At present, to produce a farm vehicle tyre, a tyre casing is prepared and wound onto a building drum; the tread belts are wound about the casing on the building drum, and a smooth, green-rubber blank tread is wound over the belts; and the casing, wound with the belts and the blank tread, is inserted inside a curing mold negatively reproducing the tread pattern. During the curing process, the rubber of the blank tread is heated and subjected to high pressure to adapt to the shape of the curing mold and so form the tread pattern.

The tread pattern includes the lugs, which are exceptionally large and, above all, project upwards considerably from the rest of the tread (even by as much as ten centimetres at the highest point). Forming the lugs in the curing mold therefore involves considerable rubber displacement inside the mold, i.e. a large amount of rubber must migrate from one part of the mold to another. This rubber displacement inside the curing mold, i.e. the large amount of rubber that has to be pressured into forming the lugs, prevents the formation of an evenly thick tread base. In other words, migration of a large amount of rubber inside the curing mold results in the formation of an 'uneven' tread base (i.e. differing widely in thickness) which may result in defects, rippling and unsightly flaws.

To prevent too thin a rubber thickness at the thinnest parts of the tread base, the average thickness of the tread base must be 'oversized' with respect to an optimum thickness that could be used if the tread base were of perfectly even thickness. In other words, to prevent too thin a rubber thickness at the thinnest parts of the tread base, the whole tread base must be made thicker using more rubber. Oversizing the average thickness of the tread base means more material (rubber) is required to produce the tyre (with no advantage whatsoever in terms of nominal tyre performance), thus increasing the manufacturing cost and weight of the tyre.

Moreover, because the size of the green-rubber tread cross section is calculated according to tyre size, the known production method described above requires a different green-rubber tread cross section for each tyre radius. In other words, the green-rubber tread cross section of a 420/85 R24 tyre, for example, cannot be used for a 420/85 R28, R30, R34 or R38 tyre.

To eliminate these drawbacks, it has been proposed to reduce the thickness of the blank tread wound about the casing (with the belts in between), and to apply green-rubber blocks to the areas of the blank tread where the lugs are to be formed. This reduces the amount of rubber that has to migrate from one part of the curing mold to another, by providing more rubber (in the form of rubber blocks) where it is needed (to form the lugs) right from the outset. Even using rubber blocks, however, the thickness of the tread base still remains significantly uneven, especially at the shoulders of the tyre where the lugs are larger. In other words, even using rubber blocks, the average thickness of the tread base must be 'oversized' with respect to an optimum thickness that could be used if the tread base were of perfectly even thickness.

Patent Application WO2012001544A1 describes a method of producing a lugged tyre, whereby a green-rubber blank tread is produced; rubber blocks are applied to the areas of the blank tread where the lugs are to be formed; and the blank tread, together with the blocks, is cured in a curing mold.

Patent US3770038A describes a method of producing a lugged tyre, whereby a green-rubber blank tread is produced; rubber blocks are applied to the areas of the blank tread where the lugs are to be formed; and the blank tread, together with the blocks, is cured in a curing mold.
Patent application DE1729806 discloses the renewal of special tires, such as tires for earthmoving equipment, tractors, construction machinery and other special applications, with pre-vulcanized studs, which have lips for their attachment on either side of their foot.
Patent Application FR2219000 discloses an outer layer of rubber, an inner layer of rubber or steel, and an intermediate layer that are vulcanised together in one operation. The intermediate layer consists of a mixture of rubber and textile or glass fibres or metal threads, so that the various plastic materials flow together and give a firm bond in the moulding cycle

### DESCRIPTION OF THE INVENTION

It is an object of the present invention to provide a method and system for producing a tyre tread with lugs, which method and system are designed to eliminate the above drawbacks and, in particular, are cheap and easy to implement.

According to the present invention, there are provided a method and system for producing a tyre tread with lugs, as claimed in the accompanying Claims.

### BRIEF DESCRIPTION OF THE DRAWINGS

A number of non-limiting embodiments of the present invention will be described by way of example with reference to the attached drawings, in which:
Figure 1 shows a view in perspective of a farm vehicle tyre;
Figure 2 shows a front view of the Figure 1 farm vehicle tyre;
Figure 3 shows a side view of the Figure 1 farm vehicle tyre;
Figure 4 shows a schematic cross section of part of the Figure 1 farm vehicle tyre;
Figure 5 shows a schematic of a system, in accordance with the present invention, for producing the Figure 1 farm vehicle tyre;
Figure 6 shows a schematic of a building drum of the Figure 5 system;
Figure 7 shows a plan view of a portion of a blank tread used in the Figure 5 system;
Figure 8 shows a cross section along line VIII-VIII of the Figure 7 blank tread;
Figure 9 shows a schematic view in perspective of an extruder for extruding the Figure 7 blank tread;
Figure 10 shows a schematic view in perspective of an extruder for extruding green-rubber blocks for application to the Figure 7 blank tread;
Figure 11 shows a schematic plan view of a crosswise cut to separate two consecutive Figure 10 blocks;
Figure 12 shows a plan view of a portion of an alternative embodiment of a blank tread used in the Figure 5 system;
Figure 13 shows a cross section along line XIII-XIII of the Figure 12 blank tread;
Figure 14 shows a schematic view in perspective of an extruder for extruding green-rubber blocks for application to the Figure 12 blank tread;
Figure 15 shows a schematic plan view of a crosswise cut to shape a Figure 14 block;
Figure 16 shows a plan view of a portion of a further embodiment of a blank tread used in the Figure 5 system;
Figure 17 shows a cross section along line XVII-XVII of the Figure 16 blank tread;
Figure 18 shows a schematic of the Figure 6 building drum used in an alternative embodiment;
Figure 19 shows a view in perspective of a different embodiment of a farm vehicle tyre;
Figure 20 shows a front view of the Figure 19 farm vehicle tyre;
Figure 21 shows a side view of a variation in the construction of a green-rubber block applied to the Figure 7 blank tread;
Figure 22 shows a schematic of a connecting device for connecting the Figure 21 green-rubber block mechanically to the Figure 7 blank tread;
Figure 23 shows a side view of a further variation in the construction of a green-rubber block applied to the Figure 7 blank tread;
Figures 24-29 show schematics of a number of embodiments of an application device for applying green-rubber blocks to the Figure 7 blank tread.

### PREFERRED EMBODIMENTS OF THE INVENTION

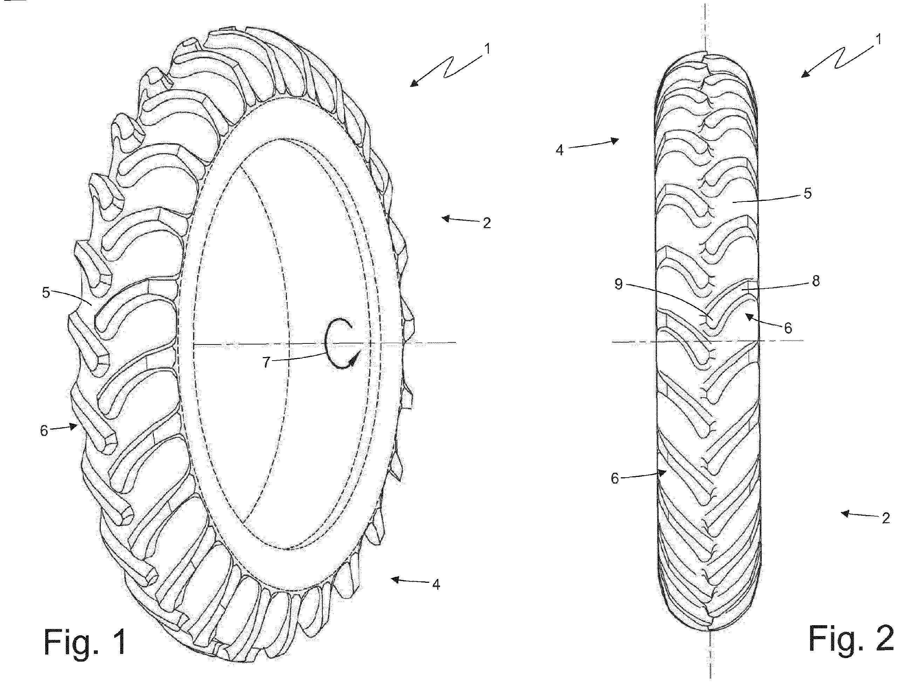

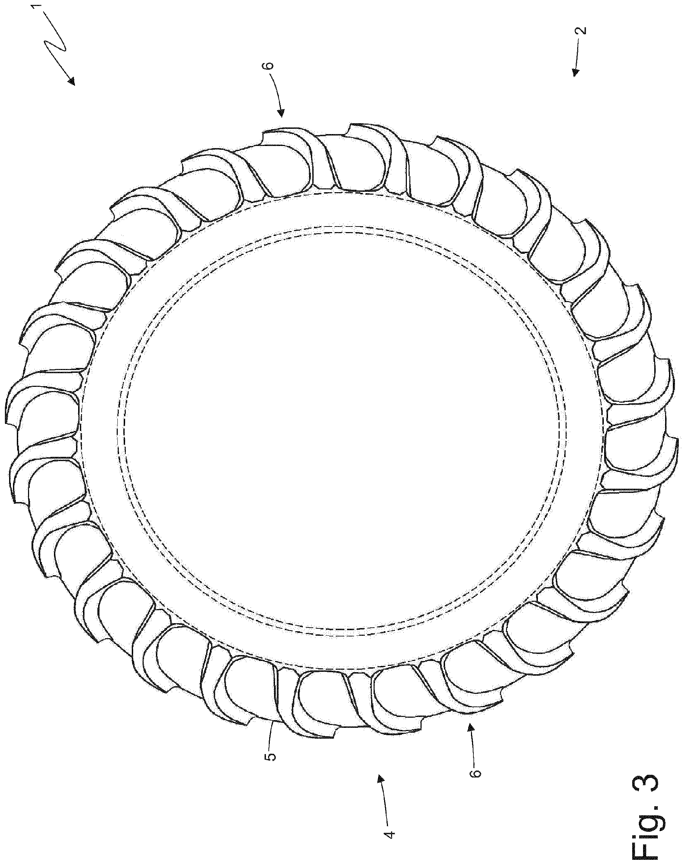

Number 1 in Figures 1-4 indicates as a whole a farm vehicle tyre.

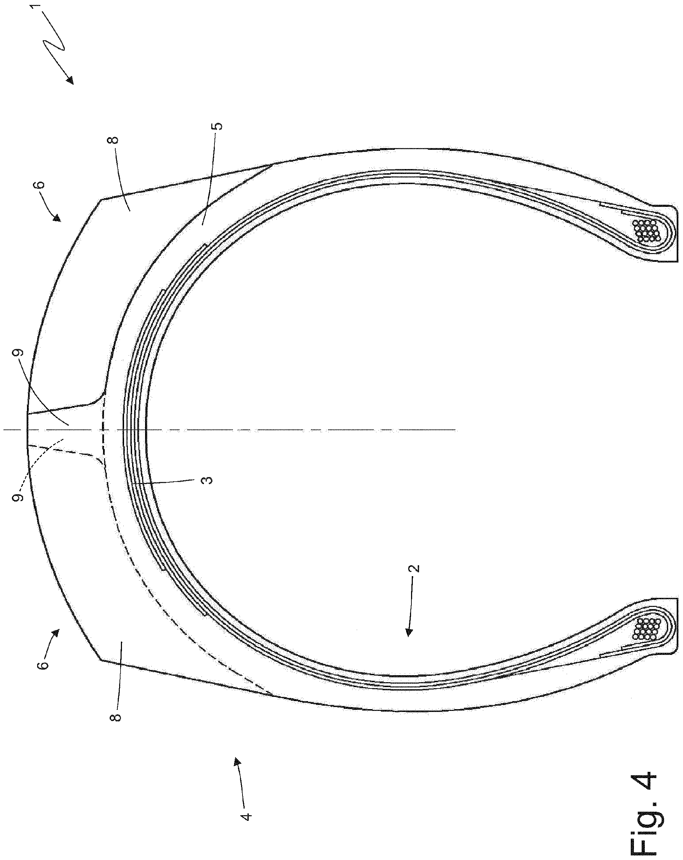

Tyre 1 comprises a toroidal casing 2, which extends about a central axis of rotation and supports tread belts 3 wound about casing 2, and a tread 4 wound about casing 2 and over belts 3. Tread 4 comprises a tread base 5, which completely covers casing 2 and is of substantially constant thickness; and a number of lugs 6, which project upwards (i.e. extend radially outwards) from tread base 5 and are arranged symmetrically about the axis of rotation. Each lug 6 curves from the centreline of tyre 1 to a corresponding shoulder of tyre 1, has a truncated-cone-shaped cross section (tapering away from tread base 5), and has a front wall and a rear wall with respect to a given rolling direction 7 of tyre 1. Each lug 6 has a lateral portion 8 at a shoulder of tyre 1; and a centre portion 9 located in the centre area of tyre 1. As shown clearly in Figure 4, each lug 6 is thinner at centre portion 9, and thicker at lateral portion 8. As shown clearly in Figure 2, centre portion 9 of each lug 6 has a greater curvature than lateral portion 8 (roughly speaking, lateral portion 8 may be assumed to be substantially straight).

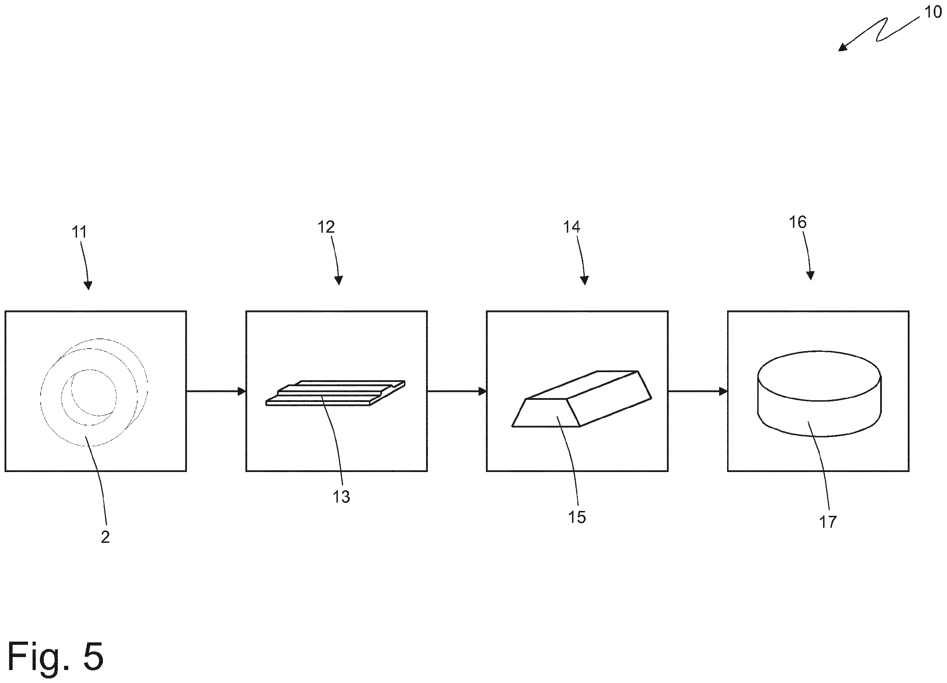

Number 10 in Figure 5 indicates as a whole a production system for producing farm vehicle tyre 1. Production system 1 comprises a building unit 11 for producing casing 2 of tyre 1; a winding unit 12, which winds first belts 3 and then a green-rubber blank tread 13 about casing 2; an application unit 14, which applies green-rubber blocks 15 to the areas of blank tread 13 where lugs 6 are to be formed; and a curing unit 16 for curing casing 2, together with belts 3, blank tread 13 and blocks 15, in a curing mold 17 negatively reproducing the pattern of tread 4. In an alternative embodiment, blocks 15 may be made of cured, as opposed to green, rubber, i.e. may be pre-cured.

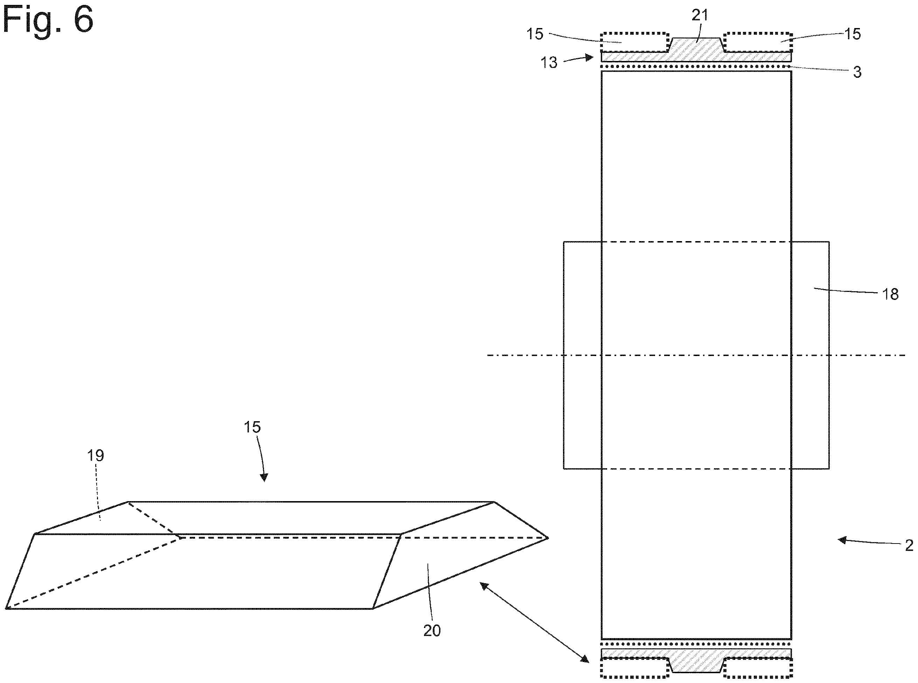

As shown in Figure 6, casing 2 produced on building unit 11 is mounted onto a building drum 18 powered to successively receive belts 3, blank tread 13 and blocks 15. In other words, once casing 2 is mounted on building drum 18, belts 3 are wound about casing 2, blank tread 13 is wound about casing 2 and over belts 3, and blocks 15 are applied to blank tread 13 wound about casing 2. Each block 15 has an outer wall 19 at a shoulder of blank tread 13; and an inner wall 20 opposite outer wall 19 and located in the centre area of blank tread 13.

In the Figure 6, 7 and 8 embodiment, blank tread 13 is thinner at the sides and thicker at the centre, so as to define a raised centre portion 21 against which inner walls 20 of blocks 15 rest. Inside curing mold 17, blocks 15 therefore eventually form lateral portions 8 of lugs 6, and raised centre portion 21 eventually forms centre portions 9 of lugs 6 (that is, the centre portion of the pattern of tread 4). In other words, inside curing mold 17, the rubber needed to form lateral portions 8 of lugs 6 comes mostly from blocks 15, while the rubber needed to form centre portions 9 of lugs 6 (which define the centre portion of the pattern of tread 4) comes mostly from raised centre portion 21 of blank tread 13.

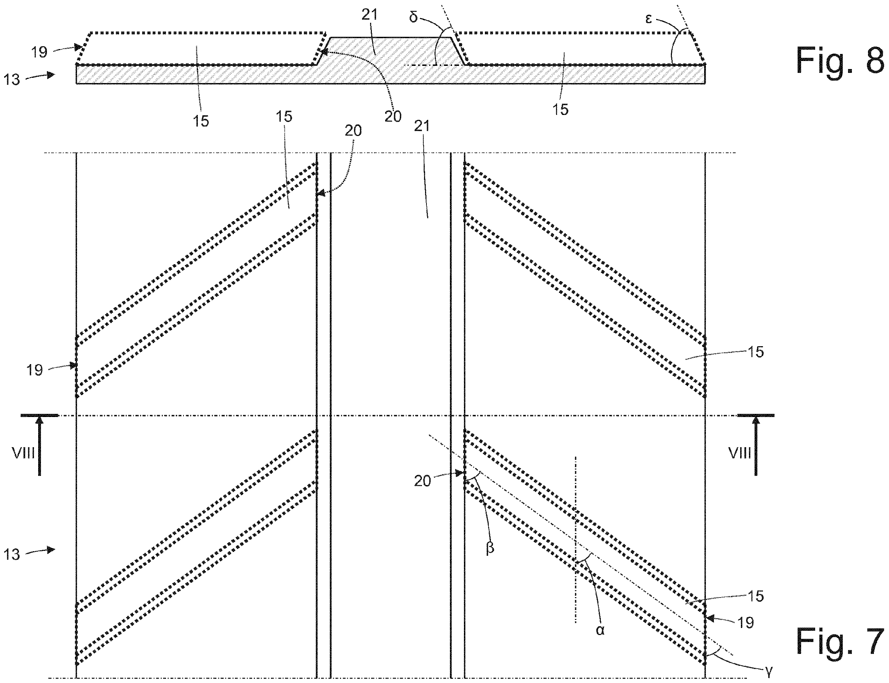

In a preferred embodiment shown in Figure 8, blank tread 13 is of constant thickness outwards of raised centre portion 21; and raised centre portion 21 of blank tread 13 has a trapezoidal cross section. (Alternatively, raised centre portion 21 of blank tread 13 may have a rectangular cross section).

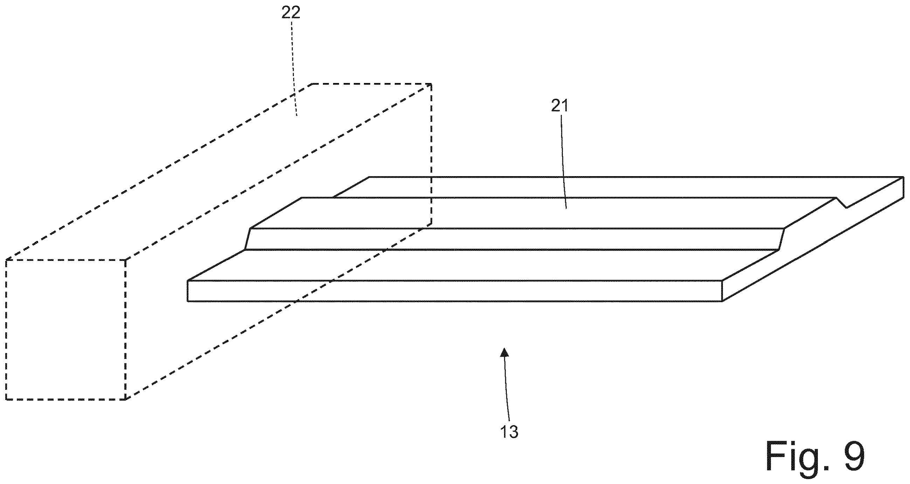

In a preferred embodiment shown in Figure 9, blank tread 13 has a constant cross section along its whole length, and is extruded by an extruder 22 (i.e. by a forming device 22 employing the extrusion process). Normally (but not necessarily), the blank tread 13 extruded by extruder 22 is first wound into a reel on a carriage-mounted support; and the carriage is then moved over to the building drum 18, close to which the blank tread 13 is unwound off the reel and about casing 2 mounted beforehand onto building drum 18. In one possible embodiment, the bottom surface of blank tread 13 is sprayed with liquid cement as blank tread 13 is wound into the reel. It is important to note that blank tread 13 is relatively compact and light (when compared with the finished tread 4), so the carriage supporting the reel of blank tread 13 is relatively easy to handle and can be manoeuvred easily by one operator. Moreover, it is easier for the operator to wind blank tread 13 precisely about casing 2, if blank tread 13 is unwound off a reel rather than being fed directly from extruder 22; so blank tread 13 can be wound easily about casing 2 with no waste. Finally, the carriage supporting the reel of blank tread 13 can be integrated easily on existing tyre assembly machines (TAMs).

In a different, perfectly equivalent embodiment, as opposed to being extruded by extruder 22, blank tread 13 is built directly on building drum 18 by coiling a green-rubber strip (normally unwound off a reel into which it is wound as soon as it is extruded) about casing 2 on building drum 18. This method of constructing blank tread 13 is used for very large tyres 1. By way of a further alternative, blank tread 13 may be produced by calandering green rubber.

In a preferred embodiment shown in Figure 7, each block 15 is positioned at an angle with respect to raised centre portion 21, i.e. with respect to a circumferential plane of blank tread 13 (following, as stated, the areas where lugs 6 are to be formed) so that block 15 forms an acute angle α with a circumferential plane.

To distribute the green rubber more evenly inside curing mold 17, the inner wall 20 of each block 15 contacting raised centre portion 21 is shaped on a slant to form an acute angle β with the longitudinal axis of block 15. Preferably (but not necessarily), acute angle β equals acute angle α, so that inner wall 20 is parallel to raised centre portion 21.

Preferably, to distribute the green rubber more evenly inside curing mold 17, the inner wall 20 of each block 15 contacting raised centre portion 21 is shaped on a slant to also form an acute angle δ with the tangential plane of blank tread 13. Preferably (but not necessarily), acute angle δ is supplementary to the angle formed by the lateral walls of raised centre portion 21 with the tangential plane of blank tread 13. In other words, inner wall 20 of each block 15 slopes doubly: by acute angle β with respect to the longitudinal axis of block 15, and by acute angle δ with respect to the tangential plane of blank tread 13.

Preferably, to distribute the green rubber more evenly inside curing mold 17, the outer wall 19 of each block 15 is also shaped on a slant to form an acute angle γ with the longitudinal axis of block 15. Preferably (but not necessarily), acute angle γ equals acute angle α, so that outer wall 19 is parallel to raised centre portion 21 and inner wall 20. In other words, preferably (but not necessarily), the two opposite walls 19 and 20 of each block 15 are parallel to each other and slope with respect to the longitudinal axis of block 15.

Preferably, to distribute the green rubber more evenly inside curing mold 17, outer wall 19 of each block 15 is also shaped on a slant to form an acute angle ε with the tangential plane of blank tread 13. Preferably (but not necessarily), acute angle ε equals angle δ, so outer wall 19 is parallel to inner wall 20. In other words, outer wall 19 of each block 15 slopes doubly: by acute angle γ with respect to the longitudinal axis of block 15, and by acute angle ε with respect to the tangential plane of blank tread 13.

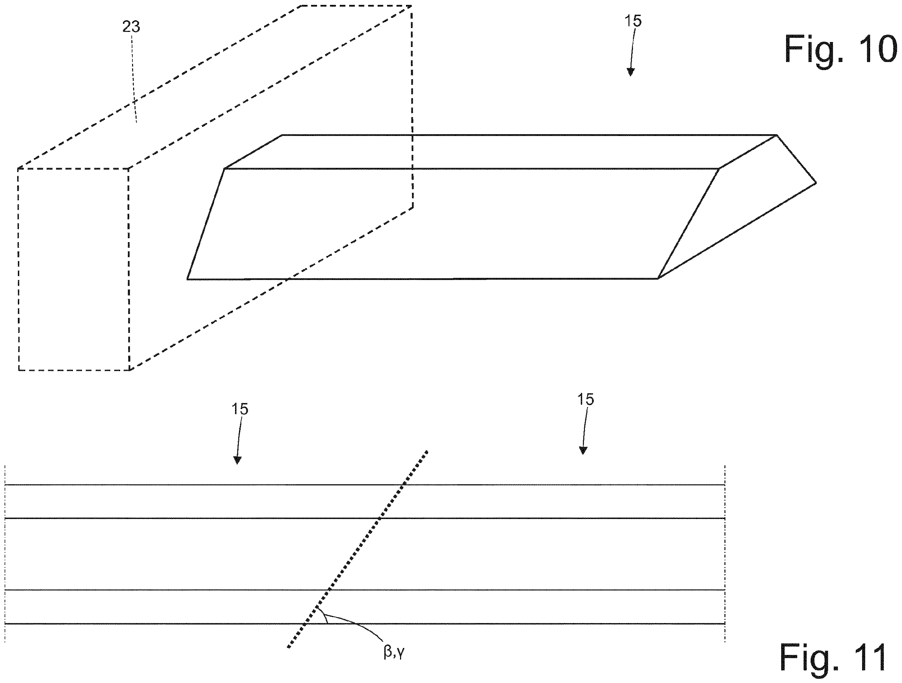

In a preferred embodiment shown in Figure 10, each block 15 has a constant trapezoidal cross section along its whole length, and is extruded by an extruder 23 (i.e. by a forming device 23 employing the extrusion process). More specifically, extruder 23 extrudes a continuous rubber strip with the same trapezoidal cross section as blocks 15; and blocks 15 are cut off the continuous rubber strip from extruder 23 by a crosswise cut in a plane inclined at an angle equal to acute angle β (normally equal to acute angle γ), and at a further angle equal to acute angle δ) normally equal to acute angle ε).

Normally (but not necessarily), the continuous rubber strip extruded by extruder 23 is first wound into a reel on a carriage-mounted support; and the carriage is then moved over to the building drum 18, close to which the rubber strip is unwound off the reel and cut crosswise into individual blocks 15, which are then applied to blank tread 13.

In an alternative embodiment, as opposed to being extruded, blocks 15 may be formed by calandering or molding green rubber. In other words, the green rubber from the mixer ('Banbury') may be extruded or calandered or molded into blocks 15.

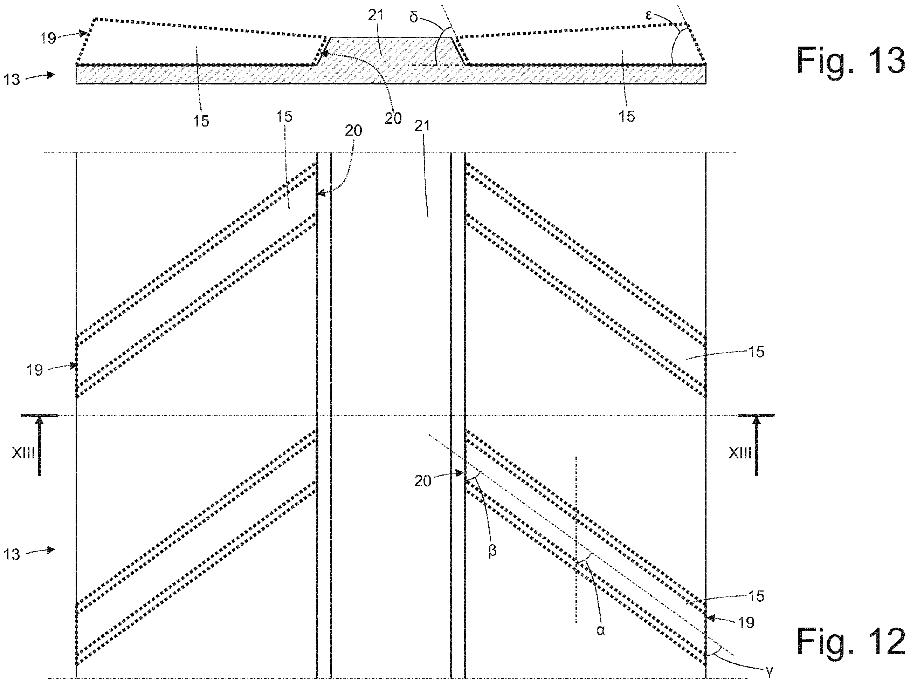

In the Figure 7-10 embodiment, each block 15 has a constant trapezoidal cross section along its whole length. In the Figure 12-14 embodiment, each block 15 has a trapezoidal cross section varying lengthwise, so as to be thinner at inner wall 20 and thicker at outer wall 19. Preferably, the thickness of each block 15 increases evenly (linearly) from inner wall 20 to outer wall 19. Alternatively, the thickness of each block 15 may increase discontinuously (in steps) from inner wall 20 to outer wall 19.

Varying the cross section of each block 15 lengthwise provides for further improving rubber displacement inside curing mold 17, by providing more rubber at the shoulders of tyre 1 (i.e. at lateral portions 8, where lugs 6 are thicker) and less rubber in the centre area of tyre 1 (i.e. at centre portions 9, where lugs 6 are thinner). On the other hand, forming blocks 15 with a lengthwise-varying cross section is more complicated (and therefore takes longer and is more expensive).

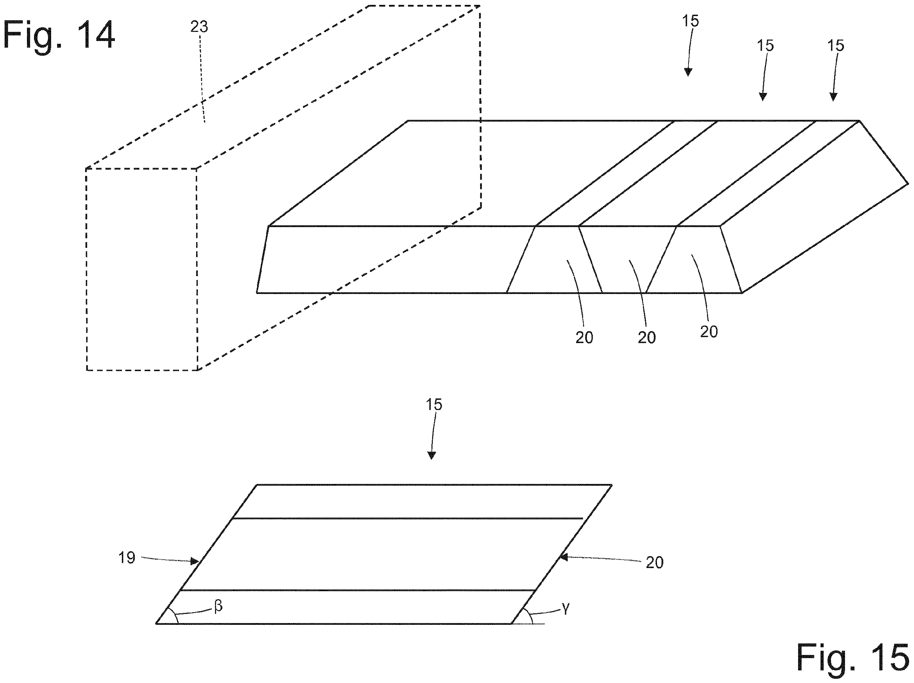

As shown in Figure 14, blocks 15 may be formed by extruding, on extruder 23, a continuous rubber strip with a cross section identical to the longitudinal section of blocks 15; and by cutting blocks 15 off the continuous rubber strip by a crosswise cut in an inclined plane (as shown clearly in Figure 14, the blocks are cut off the continuous rubber strip so they face alternately upwards and downwards, by continually inverting the angle of the cutting plane).

As shown in Figures 14-17, walls 19 and 20 of each block 15 can be shaped by appropriately shaping the extrusion outlet of extruder 23, to form inner wall 20 and outer wall 19 sloping at corresponding (possibly different) angles β and γ, and at corresponding (possibly different) angles δ and ε.

As an alternative to the above method of producing blocks 15, a continuous rubber strip (as shown in Figure 10 or 14) may be extruded by extruder 23, and then cut crosswise, normally in an inclined plane, into blocks 15; at which point, the individual blocks 15 are pressure-molded to the desired final shape in a mold. In other words, each block 15 cut off the continuous rubber strip from extruder 23 is inserted inside a mold negatively reproducing the desired final shape of the block, and is then deformed under pressure, i.e. molded to shape, inside the mold. In this connection, it is important to note that the mold for shaping blocks 15 must be located as close as possible to extruder 23, so blocks 15 are molded as soon as they are extruded and therefore substantially still at extrusion temperature. As stated, the green rubber may be molded into blocks 15 even without being extruded beforehand, i.e. the green rubber from the mixer may be molded directly.

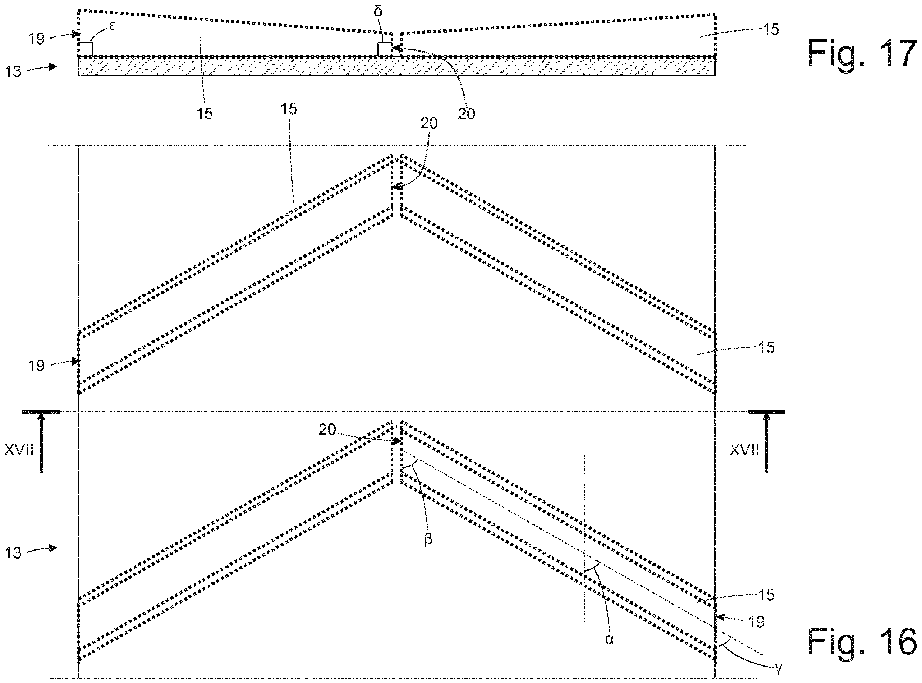

In a further embodiment shown in Figures 16 and 17, when (and only when) blocks 15 vary lengthwise in cross section (i.e. are thinner at inner wall 20 and thicker at outer wall 19), a blank tread 13 of constant thickness (i.e. with no raised centre portion 21) may be used.

In one possible embodiment, to improve grip of blocks 15 to blank tread 13 (and so prevent accidental movement of blocks 15 when inserting casing 2 inside curing mold 17), liquid cement is applied between a bottom surface of each block 15 and a top surface of blank tread 13. Alternatively or in addition to liquid cement, to improve grip of blocks 15 to blank tread 13, the bottom surface of each block 15 and/or the top surface of blank tread 13 may be pre-heated (e.g. using infrared-ray lamps for non-contact heating).

When blocks 15 are applied to blank tread 13, it is essential to ensure they adhere firmly enough to blank tread 13 to prevent them from detaching or at any rate shifting out of position when subsequently handling blank tread 13 (i.e. when inserting blank tread 13 inside curing mold 17). In the event of blocks 15 moving out of position when closing curing mold 17 or during the actual curing process, the rubber is forced to move further than it ordinarily would under ideal conditions (i.e. with blocks 15 positioned correctly), thus possibly resulting in the formation of weak areas (i.e. more susceptible to fatigue failure) in tyre 1.

In one possible embodiment, blank tread 13 is made from a softer first rubber compound, and blocks 15 are made from a different second rubber compound harder than the first. This embodiment makes it possible to improve both performance and working life of tyre 1, by making lugs 6 (substantially formed from the rubber of blocks 15) harder (and therefore more wear resistant), while tread base 5 (substantially formed from the rubber of blank tread 13) is softer and so able to better distribute mechanical stress produced by the rolling movement of the tyre.

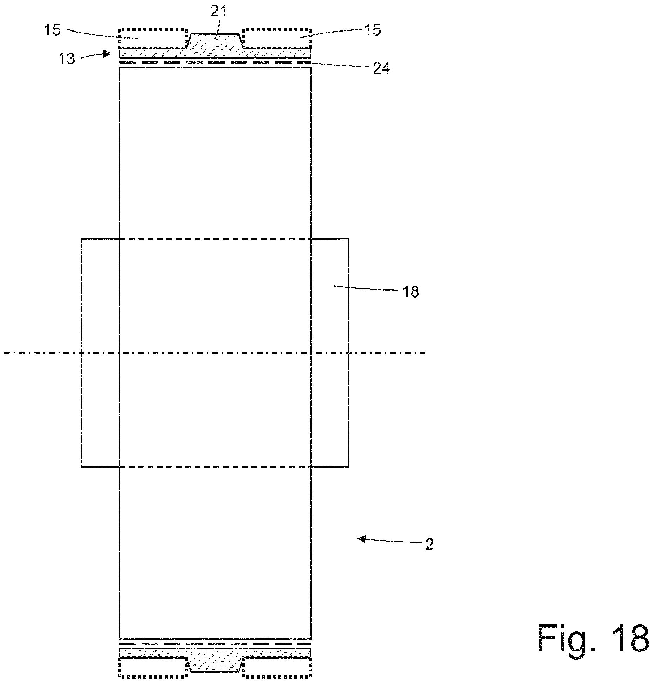

In the Figure 6 embodiment, building unit 11 produces a new casing 2 for producing a new tyre 1 (in fact, belts 3 are first wound about the 'virgin' casing 2). In an alternative embodiment shown schematically in Figure 18, building unit 11 starts with a worn tyre 1 for retreading. First of all, the worn tread is removed from tyre 1 to expose an intermediate surface of casing 2 underneath (at any rate, a surface over the existing belts 3), and the intermediate surface of casing 2 is skived. Once the skiving operation is completed, casing 2 is wound with a green-rubber cushion 24; blank tread 13 is then wound about casing 2, on top of green-rubber cushion 24; and blocks 15 are applied as described above to blank tread 13. Finally, casing 2, together with green-rubber cushion 24, blank tread 13 and blocks 15, is cured in a toroidal curing mold 17 to produce a retreaded tyre 1.

In the above embodiments, blocks 15 are applied to blank tread 13 after it is wound about casing 2. In an alternative embodiment, blocks 15 may be applied to the flat blank tread 13, which is then wound, complete with blocks 15, about casing 2. In this embodiment, the flat blank tread 13, complete with blocks 15, may even be cured to form a pre-cured tread (PCT) 4, which is then wound about casing 2 as part of a 'cold' tyre building or retreading process.

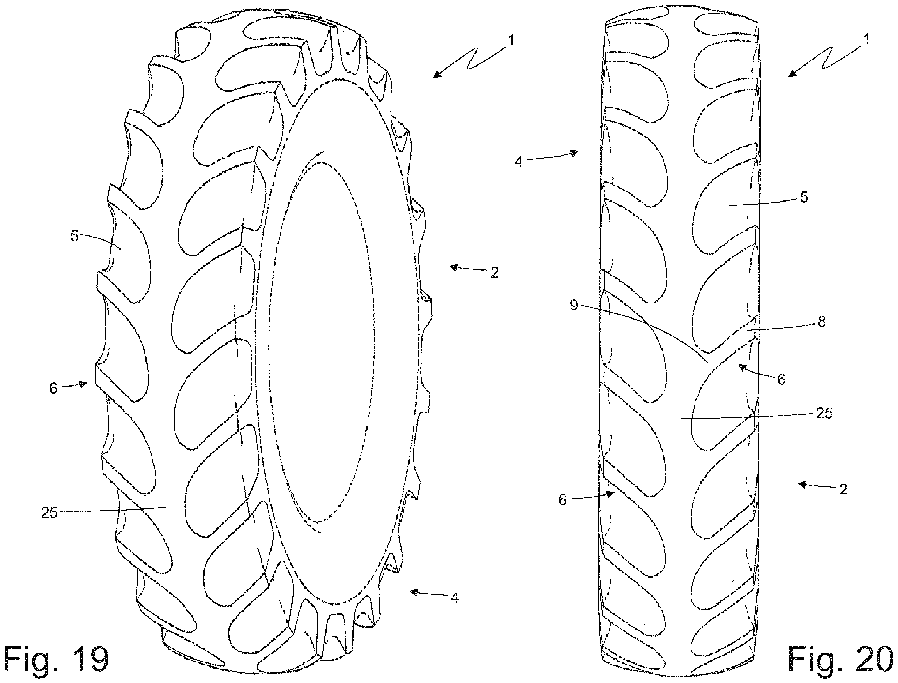

In the Figure 1-4 embodiment, the tread 4 pattern only comprises lugs 6 projecting upwards (i.e. extending radially outwards) from tread base 5. In the Figure 19 and 20 embodiment, the tread 4 pattern, in addition to lugs 6, also comprises a central rib 25, which projects upwards (i.e. extends radially outwards) from tread base 5, is annular in shape (i.e. is in the form of a ring seamlessly encircling the whole of tread 4), and is located centrally along the centreline of tread 4. In this embodiment, centre portions 9 of lugs 6 blend (i.e. merge) seamlessly with central rib 25. The Figure 19 and 20 tread 4 with central rib 25 is preferably produced from blank tread 13 with raised centre portion 21, which minimizes the amount of rubber migration, inside curing mold 17, required to form central rib 25 of tread 4. Raised centre portion 21 of blank tread 13 is normally designed to form both central rib 25 of tread 4 and centre portions 9 of lugs 6. Alternatively, raised centre portion 21 of blank tread 13 is designed to only form central rib 25 of tread 4, while blocks 15 form the whole of lugs 6 (i.e. both lateral portion 8 and centre portion 9 of each lug 6).

As stated, when blocks 15 are applied to blank tread 13, it is essential to ensure they adhere firmly enough to blank tread 13 to prevent them from detaching or at any rate shifting out of position when subsequently handling blank tread 13 (i.e. when inserting blank tread 13 inside curing mold 17). As stated, to increase grip of blocks 15 to blank tread 13 (and so prevent blocks 15 from moving accidentally out of place when inserting casing 2 inside curing mold 17), liquid cement may be applied between a bottom surface of each block 15 and a top surface of blank tread 13. Liquid cement, however, has drawbacks: it is environmentally unfriendly, and, when used in excess (it is still an extraneous element within the rubber) may create unevenness resulting, in use, in fatigue detachment of lugs 6 from the rest of tread 4.

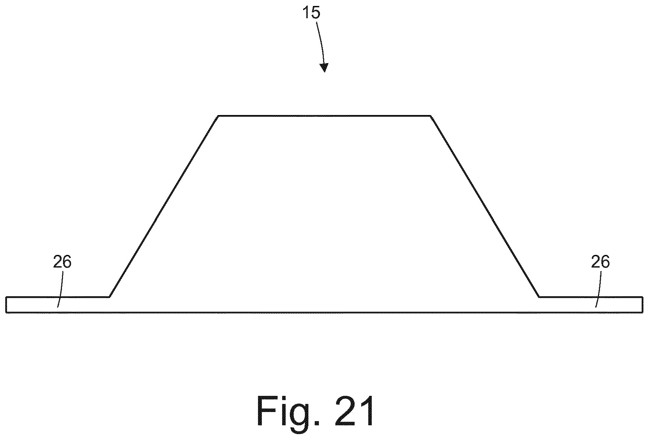

As shown in Figure 21, to increase the contact surface area (extension) between each block 15 and blank tread 13, block 15 has two bottom fastening tabs 26 (fairly thin in proportion to the overall thickness of block 15). Fastening tabs 26 of each block 15 are located on opposite sides of block 15, are fairly thin (i.e. substantially thinner than block 15), and are formed at a bottom surface of block 15 (so as to contact blank tread 13). It is important to note that the two fastening tabs 26 of each block 15 may have the same longitudinal extension as, or a smaller longitudinal extension than block 15 (i.e. may be shorter than block 15). In a different, perfectly equivalent embodiment, each block 15 has only one fastening tab 26, i.e. is asymmetrical in shape.

In the Figure 21 embodiment, the two fastening tabs 26 are located on either side, i.e. along the long (or longitudinal) sides, of block 15. In a different, perfectly equivalent embodiment, the two fastening tabs 26 are located at the front and rear end, i.e. along the short (or transverse) sides, of block 15, at walls 19 and 20. Normally, the two fastening tabs 26 are located on either side of block 15, when block 15 is extruded using an extruder 23 of the type shown in Figure 10, and are located at the front and rear end of block 15, when block 15 is extruded using an extruder 23 of the type shown in Figure 14.

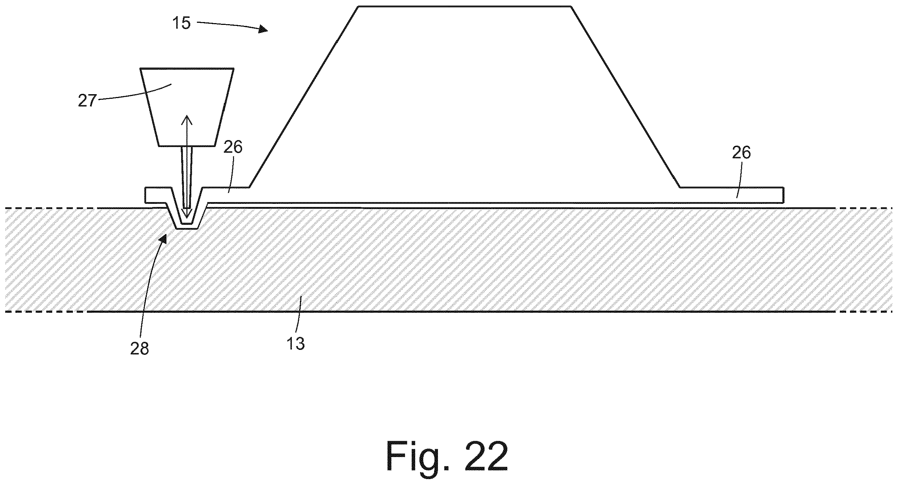

As shown in Figure 22, instead of or in addition to liquid cement (a smaller amount of which is therefore used), each block 15 may be connected mechanically to blank tread 13. In a preferred embodiment, each block 15 may be connected mechanically to blank tread 13 by local permanent deformation of block 15, which is pushed into, to penetrate the surface of, blank tread 13. Figure 22 shows a connecting device 27 for mechanically connecting block 15 to blank tread 13. Block 15 preferably has two fastening tabs 26, which are connected mechanically to blank tread 13 underneath. Basically, connecting device 27 stitches, by permanently deforming, fastening tabs 26 of block 15 to blank tread 13 underneath. Each stitch 28 made by connecting device 27 consists in permanently deforming fastening tab 26, which is pushed downwards into blank tread 13 underneath. In the Figure 22 embodiment, connecting device 27 uses a needle or punch, which is moved cyclically back and forth to stitch block 15 partly inside blank tread 13 underneath. Alternatively, connecting device 27 may use a pressure roller, which is pressed with predetermined force to force a strip of block 15 partly inside blank tread 13 underneath. The tool (i.e. needle or roller) used by connecting device 27 to locally deform block 15 may be heated to improve penetration.

In an alternative embodiment not shown, each block 15 has no fastening tabs 26, and is stitched to blank tread 13 underneath, close to the bottom edges of block 15.

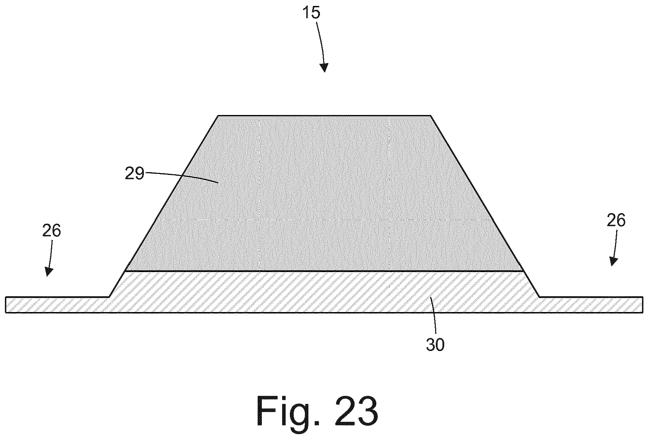

In Figure 23 a green-rubber block 15 is shown, made of two different green-rubber compounds 29 and 30: the main top part of block 15 is made of a harder green-rubber compound 29 designed to achieve lugs 6 with the necessary mechanical and wear resistance characteristics; and the bottom part of block 15 (i.e. the part of block 15 contacting blank tread 13 underneath, and comprising fastening tabs 26, if any) is made of a softer green-rubber compound 30 capable of adhering firmly to the green-rubber compound of blank tread 13 underneath. Basically, rubber compound 29 is designed to achieve lugs 6 with the necessary mechanical and wear resistance characteristics, and rubber compound 30 to maximize adhesion to the rubber compound of blank tread 13 underneath. The two green-rubber compounds 29 and 30 of each block 15 are co-extruded by extruder 23. It is important to note that, being made of green rubber, producing each block 15 by co-extruding (at least) two different green-rubber compounds is cheap, easy and fast. Moreover, by producing each block 15 by co-extruding at least two different green-rubber compounds, the border, inside block 15, between the two different green-rubber compounds is defined by a plane surface (i.e. a perfectly flat surface with no noticeable curving).

In other embodiments not shown, each green-rubber block 15 is made from at least three different green-rubber compounds. In this embodiment, intermediate layers of recycled green rubber may be inserted to reduce both production cost and environmental impact. In other words, at least one intermediate green-rubber layer between two other green-rubber layers is made of recycled green rubber (so the recycled green rubber, which is normally of inferior performance, is located in an inner, i.e. less mechanically stressed, area of block 15). Moreover, in this embodiment, each green-rubber block 15 may be made of green-rubber compound layers decreasing outwards in viscosity (i.e. green-rubber compound layers whose viscosity decreases outwards of the centre of tyre 1). This facilitates rubber flow inside curing mold 17, thus further improving the arrangement of the rubber within the finished tyre 1, even to the point of achieving tread patterns that are currently considered problematic or even impossible.

Making blocks 15 from two different rubber compounds 29 and 30, as described above, greatly increases grip of blocks 15 to blank tread 13 underneath, and may be adopted on its own (i.e. instead of) or in conjunction with liquid cement and/or permanent-deformation stitching.

Making each block 15 from (at least) two different green-rubber compounds solves numerous retreading problems (i.e. when using casings 2 from old tyres 1 for retreading) and provides for achieving better retreaded tyres 1. Making each block 15 from (at least) two different green-rubber compounds is therefore advantageous when building new tyres 1, and particularly advantageous when retreading old tyres 1.

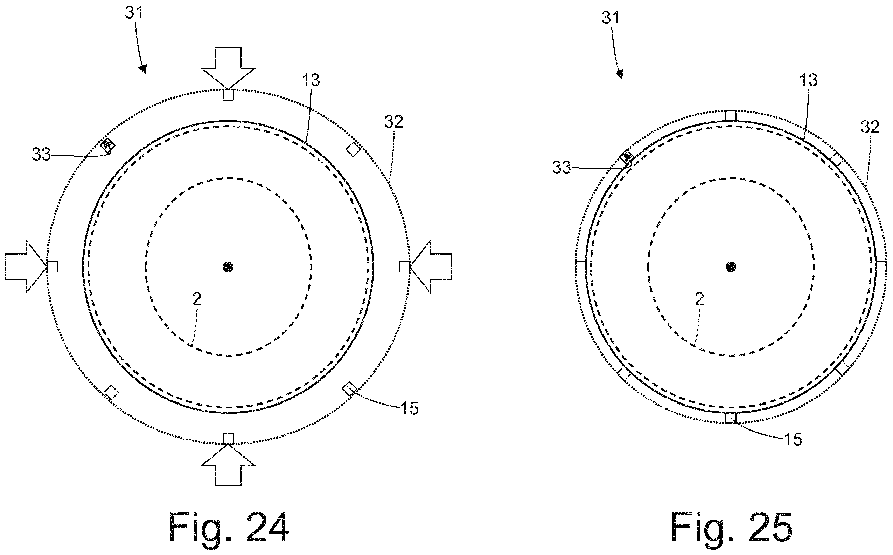

When applied, it is essential that blocks 15 be positioned accurately on blank tread 13. This is therefore preferably done using an automatic operating device (e.g. a robotized arm) which picks up and applies blocks 15 in the correct positions on blank tread 13. As shown in Figures 24 and 25, as an alternative to a robotized arm, an applicator 31, forming part of application unit 14, may be used to apply all of blocks 15, in one application movement, onto blank tread 13 wound about casing 2. More specifically, blocks 15 are loaded singly (i.e. one at a time) into applicator 31, and, once loaded, are all applied simultaneously (i.e. together in one application movement) onto blank tread 13 wound about casing 2.

Applicator 31 comprises at least one annular body 32 deformable radially to adjust its diameter. In other words, annular body 32 is deformable radially between an expanded configuration (Figure 24), in which the diameter of annular body 32 is maximum and much larger than the diameter of blank tread 13 wound about casing 2, and a contracted configuration (Figure 25), in which the diameter of annular body 32 is minimum and only slightly larger than the diameter of blank tread 13 wound about casing 2. The inner annular surface of annular body 32 supports a number of seats 33, each designed to house a corresponding block 15 with a minimum amount of slack.

In actual use, annular body 32 is first set to the expanded configuration (Figure 24) in which the diameter of annular body 32 is maximum; and all the blocks 15 to be applied by annular body 32 are inserted inside annular body 32, i.e. into corresponding seats 33 on the inner annular surface of annular body 32. Once loaded with blocks 15, annular body 32 is placed around blank tread 13 wound about casing 2, as shown in Figure 24 (in the expanded configuration, annular body 32 is much larger in diameter than blank tread 13 wound about casing 2). Annular body 32 is placed around blank tread 13, wound about casing 2, in a relative axial insertion movement between annular body 32 and casing 2. This can be done by moving annular body 32 axially and keeping casing 2 stationary, or vice versa. Once blank tread 13, wound about casing 2, is inserted inside annular body 32 (as shown in Figure 24), the diameter of annular body 32 is gradually reduced to bring blocks 15 into contact with blank tread 13 wound about casing 2. At this point, annular body 32 is tightened about blank tread 13 with a predetermined calibrated force to press blocks 15 with a predetermined calibrated pressure against, and so apply them to, blank tread 13. Finally, annular body 32 is moved from the contracted configuration (Figure 25) back to the expanded configuration (Figure 24) to detach from and release blocks 15 on blank tread 13; at which point, annular body 32 can be withdrawn axially off blank tread 13 wound about casing 2, to repeat the application cycle on another blank tread 13 wound about another casing 2.

In one possible embodiment, seats 33 in annular body 32 may have retainers for retaining blocks 15 inside corresponding seats 33 until blocks 15 are applied to blank tread 13 wound about casing 2. For example, the retainers may be pneumatic, and so retain blocks 15 inside corresponding seats 33 by suction. Obviously, the retaining action of the retainers is cut off once blocks 15 are applied to blank tread 13, to enable release of the blocks by annular body 32.

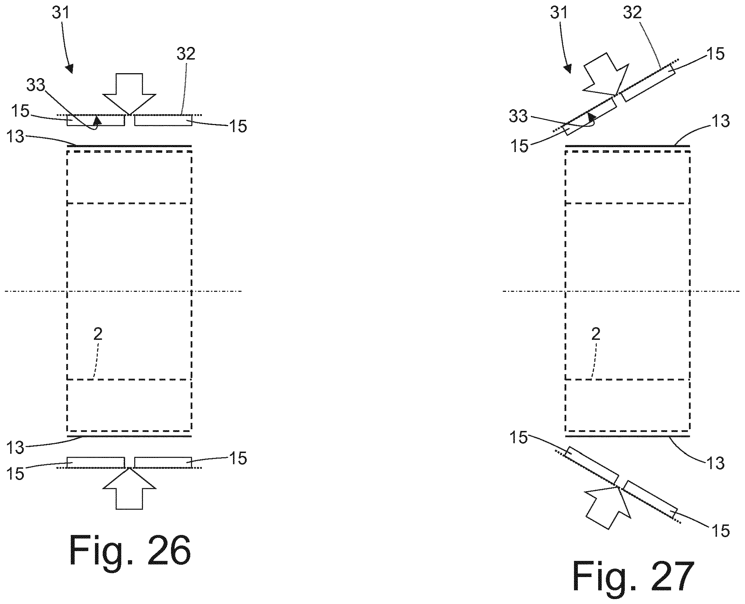

In the embodiment shown schematically in Figures 24, 25 and 26, annular body 32 is cylindrical, so its diameter is adjusted by simply moving sectors of annular body 32 radially. In the Figure 27 variation, on the other hand, annular body 32 is truncated-cone-shaped, so its diameter is adjusted by radially moving and simultaneously rotating sectors of annular body 32.

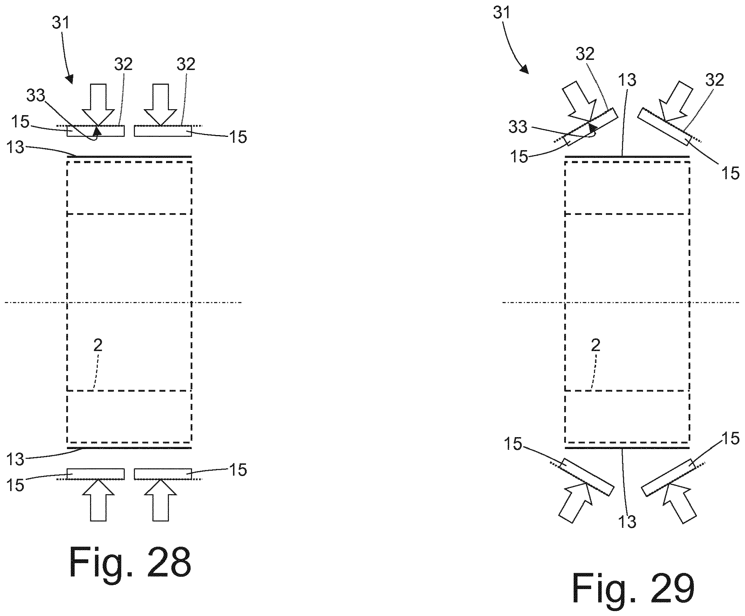

In the Figure 24-27 embodiments, applicator 31 comprises one annular body 32 supporting both rows of blocks 15 (as shown clearly in Figures 26 and 27). In alternative, perfectly equivalent embodiments shown in Figures 28 and 29, applicator 31 comprises two identical, specular annular bodies 32 located symmetrically on opposite sides of blank tread 13 wound about casing 2. In this embodiment, each annular body 32 supports a corresponding row of blocks 15 (as shown clearly in Figures 28 and 29).

Applicator 31 is particularly advantageous by enabling perfect positioning of blocks 15 on blank tread 13, wound about casing 2, with no difficulty whatsoever. Moreover, being provided with (clearly marked) seats 33 in which to insert blocks 15, annular body 32 can be loaded quickly and easily by hand. In other words, how/where to position blocks 15 is no longer of any concern to the operator, who need simply insert blocks 15 inside corresponding seats 33 with no risk of error whatsoever.

In the embodiments described above, blocks 15 are first applied to blank tread 13, and the blank tread 13, wound about casing 2 and supporting blocks 15, is then inserted inside curing mold 17. In an alternative, perfectly equivalent embodiment, blocks 15 are inserted inside curing mold 17 separately from and before blank tread 13; so blocks 15 are only applied to blank tread 13 inside curing mold 17, when blank tread 13, wound about casing 2, is also inserted inside curing mold 17. By first inserting blocks 15 individually in the correct position inside curing mold 17, this embodiment rules out, from the outset, any possibility of blocks 15 being positioned incorrectly inside curing mold 17. This embodiment may also comprise a locking system for locking blocks 15 in the correct position inside curing mold 17, before blank tread 13, wound about casing 2, is also inserted inside curing mold 17. The locking system may be pneumatic (e.g. by creating suction through ventilation holes next to blocks 15) or mechanical (e.g. by creating a small amount of shape/size interference between blocks 15 and the areas of curing mold 17 into which blocks 15 are inserted, i.e. by driving blocks 15 tightly into curing mold 17).

The above method of producing tread 4 of farm vehicle tyre 1 has numerous advantages.

First and foremost, the method described provides for minimizing rubber migration inside curing mold 17, and so achieving a highly even tread base 5, i.e. of more or less constant thickness over its whole area. As such, no 'oversizing' of the mean thickness of tread base 5 is necessary, thus enabling a significant reduction in the cost and total weight of tyre 1 for a given performance. It is important to note that, for casing 2, complete with blank tread 13 and blocks 15, to fit smoothly inside curing mold 17, there are strict geometric limitations as to the size of blank tread 13, and especially the size and shape of blocks 15. By virtue of raised centre portion 21 of blank tread 13 and/or the variation in the cross section of blocks 15, it is possible to achieve more or less perfect rubber distribution (i.e. to provide the rubber exactly where it is needed in the tread 4 pattern), as well as smooth insertion of casing 2, complete with blank tread 13 and blocks 15, inside curing mold 17.

Moreover, the method described allows the same size green-rubber tread cross section to be used for producing same-type tyres of different radii (i.e. permits 'size rim scaling') by maintaining a constant thickness of blank tread 13. That is, the different amount of rubber required to form a different number of lugs 6 is obtained by varying the number of blocks 15, with no change whatsoever in the thickness of blank tread 13. For example, the same size green-rubber tread cross section may be used to produce tyres 420/85 of radius R24, R28, R30, R34 and R38.

## Claims

1. A method of producing a tyre tread (4) with lugs (6) ;
the tread (4) comprising a tread base (5); and a number of lugs (6), each of which projects upwards from the tread base (5), and has a lateral portion (8) located at a shoulder of the tyre (1), and a centre portion (9) located in the centre area of the tyre (1);
the method comprising the steps of:
preparing a green-rubber blank tread (13);
applying green-rubber blocks (15) to the areas of the blank tread (13) where the lugs (6) are to be formed, each block having an outer wall (19) located at a shoulder of the blank tread (13), and an inner wall (20) opposite the outer wall (19) and located in the centre area of the blank tread (13); and
curing the blank tread (13), together with the blocks (15), in a curing mold (17) negatively reproducing the pattern of the tread (4);
the method being **characterized in that:**
each block (15) is made from at least three different green-rubber compound layers, by co-extruding the green-rubber compounds in the same extruder (23); and
an intermediate green-rubber layer between two other green-rubber layers is made of recycled green rubber.

2. A method as claimed in Claim 1, wherein:
a main top part of each block (15) is made from a first rubber compound (29); and
a bottom part, contacting the blank tread (13) underneath, of each block (15) is made from a second rubber compound (30) designed to adhere firmly to the rubber compound of the blank tread (13).

3. A method as claimed in Claim 2, wherein the first rubber compound (29) is harder than the second rubber compound (30).

4. A method as claimed in Claim 2 or 3, wherein the first rubber compound (29) is optimized to achieve lugs (6) with the necessary mechanical and wear resistance characteristics.

5. A method as claimed in Claim 2, 3 or 4, wherein the second rubber compound (30) is optimized to maximize adhesion to the rubber compound of the blank tread (13).

6. A method as claimed in one of Claims 1 to 5, wherein each block (15) has at least one fastening tab (26), which rests on the blank tread (13) and is made from the second rubber compound (30).

7. A method as claimed in Claim 6, wherein each block (15) has two fastening tabs (26) located on opposite sides of the block (15).

8. A method as claimed in one of Claims 1 to 7, and comprising the further step of first depositing liquid cement between a bottom surface of each block (15) and a top surface of the blank tread (13), before each block (15) is applied to the blank tread (13).

9. A method as claimed in one of Claims 1 to 8, and comprising the further step of first heating a bottom surface of the block (15) and/or a top surface of the blank tread (13), before each block (15) is applied to the blank tread (13).

10. A method as claimed in one of Claims 1 to 9, wherein, inside each block (15), the border between the different green-rubber compounds is defined by a plane surface.

11. A method as claimed in one of Claims 1 to 10, wherein the green-rubber compound layers in each block (15) decrease outwards in viscosity.

12. A system (10) for producing a tyre tread (4) with lugs (6);
the tread (4) comprises a tread base (5); and a number of lugs (6), each of which projects upwards from the tread base (5), and has a lateral portion (8) located at a shoulder of the tyre (1), and a centre portion (9) located in the centre area of the tyre (1);
the system (10) comprising:
a forming device (22) for forming a green-rubber blank tread (13);
a unit (14) for applying green-rubber blocks (15) to the areas of the blank tread (13) where the lugs (6) are to be formed, each block having an outer wall (19) located at a shoulder of the blank tread (13), and an inner wall (20) opposite the outer wall (19) and located in the centre area of the blank tread (13); and
a curing unit (16) for curing the blank tread (13), together with the blocks (15), in a curing mold (17) negatively reproducing the pattern of the tread (4) ;
the system (10) being **characterized by** comprising
an extruder (23) which is configured such that
each block (15) is made from at least three different green-rubber compound layers, by co-extruding the green-rubber compounds in the same extruder (23); and
an intermediate green-rubber layer between two other green-rubber layers is made of recycled green rubber.

## Patentansprüche

1. Verfahren zur Herstellung einer Reifenlauffläche (4) mit Stollen (6);
wobei die Lauffläche (4) eine Grundlauffläche(5) und eine Anzahl von Stollen (6) umfasst, von denen jeder von der Grundlauffläche (5) nach oben ragt und einen seitlichen Teil (8), der an einer Schulter des Reifens (1) angeordnet ist, und einen Mittelabschnitt (9) aufweist, der im Mittelbereich des Reifens (1) angeordnet ist;
wobei das Verfahren die folgenden Schritte umfasst:
Herstellen eines Rohgummi-Laufflächenzuschnitts (13);
Aufbringen von Rohgummiblöcken (15) auf die Bereiche des Laufflächenzuschnitts (13), wo die Stollen (6) gebildet werden, wobei jeder Block eine Außenwand (19), die an einer Schulter des Laufflächenzuschnitts (13) angeordnet ist, und eine Innenwand (20) gegenüber der Außenwand (19) aufweist, die im Mittelbereich des Laufflächenzuschnitts (13) angeordnet ist; und
Vulkanisieren des Laufflächenzuschnitts (13) zusammen mit den Blöcken (15) in einer Vulkanisierungsform (17), die das Muster der Lauffläche (4) negativ reproduziert;
wobei das Verfahren **dadurch gekennzeichnet ist, dass:**
jeder Block (15) aus mindestens drei verschiedenen Rohgummimischungsschichten durch gleichzeitiges Extrudieren der Rohgummimischungen in demselben Extruder (23) hergestellt wird; und
eine zwischen zwei weiteren Rohgummischichten angeordnete Rohgummizwischenschicht aus recyceltem Rohgummi angeordnet wird.

2. Verfahren nach Anspruch 1, wobei:
ein Hauptoberteil jedes Blocks (15) aus einer ersten Gummimischung (29) hergestellt wird; und
ein Bodenteil jedes Blockes, das den darunter liegenden Laufflächenzuschnitt (13) berührt, aus einer zweiten Gummimischung (30) hergestellt wird, die so beschaffen ist, dass sie fest an der Gummimischung des Laufflächenzuschnitts (13) anhaftet.

3. Verfahren nach Anspruch 2, wobei die erste Gummimischung (29) härter als die zweite Gummimischung (30) ist.

4. Verfahren nach Anspruch 2 oder 3, wobei die erste Gummimischung (29) optimiert wird, um Stollen (6) mit den erforderlichen mechanischen und Verschleißfestigkeitseigenschaften zu erzielen.

5. Verfahren nach Anspruch 2, 3 oder 4, wobei die zweite Gummimischung (30) optimiert wird, um die Adhäsion an der Gummimischung des Laufflächenzuschnitts (13) zu maximieren.

6. Verfahren nach einem der Ansprüche 1 bis 5, wobei jeder Block (15) mindestens eine Befestigungslage (26) aufweist, die auf dem Laufflächenzuschnitt (13) ruht und aus der zweiten Gummimischung (30) besteht.

7. Verfahren nach Anspruch 6, wobei jeder Block (15) zwei Befestigungslagen (26), die sich an gegenüberliegenden Seiten der Blöcke (15) befinden, aufweist.

8. Verfahren nach einem der Ansprüche 1 bis 7 und umfassend den weiteren Schritt, bei dem zunächst flüssiges Bindemittel zwischen einer Unterseite jedes Blocks (15) und einer Oberseite des Laufflächenzuschnitts (13) aufgetragen wird, bevor jeder Block (15) auf den Laufflächenzuschnitt (13) aufgebracht wird.

9. Verfahren nach einem der Ansprüche 1 bis 8 und umfassend den weiteren Schritt, bei dem zunächst eine Unterseite des Blocks (15) und/oder eine Oberseite des Laufflächenzuschnitts (13) erwärmt wird, bevor der Block (15) auf den Laufflächenzuschnitt (13) aufgebracht wird.

10. Verfahren nach einem der Ansprüche 1 bis 9, wobei innerhalb jedes Blocks (15) die Grenze zwischen den verschiedenen Rohgummimischungen durch eine ebene Oberfläche definiert wird.

11. Verfahren nach einem der Ansprüche 1 bis 10, wobei die Rohgummimischungsschichten in jedem Block (15) in ihrer Viskosität nach außen hin abnehmen.

12. System (10) zur Herstellung einer Reifenlauffläche (4) mit Stollen (6);
wobei die Lauffläche (4) eine Grundlauffläche(5); und eine Anzahl von Stollen (6) umfasst, von denen jeder von der Grundlauffläche (5) nach oben ragt und einen seitlichen Teil (8), der an einer Schulter des Reifens (1) angeordnet ist, und einen Mittelabschnitt (9) aufweist, der im Mittelbereich des Reifens (1) angeordnet ist;
wobei das System (10) Folgendes umfasst:
eine Formungsvorrichtung (22) zum Formen eines Rohgummi-Laufflächenzuschnitts (13);
eine Einheit (14) zum Aufbringen von Rohgummiblöcken (15) auf die Bereiche des Laufflächenzuschnitts (13), wo die Stollen (6) gebildet werden, wobei jeder Block eine Außenwand (19), die an einer Schulter des Laufflächenzuschnitts (13) angeordnet ist, und eine Innenwand (20) gegenüber der Außenwand (19) aufweist, die im Mittelbereich des Laufflächenzuschnitts (13) angeordnet ist; und
eine Vulkanisierungseinheit (16) zum Vulkanisieren des Laufflächenzuschnitts (13) zusammen mit den Blöcken (15) in einer Vulkanisierungsform (17), die das Muster der Lauffläche (4) negativ reproduziert;
wobei das System (10) **dadurch gekennzeichnet ist, dass** es einen Extruder (23) umfasst, der so konfiguriert ist, dass
jeder Block (15) aus mindestens drei verschiedenen Rohgummimischungsschichten durch gleichzeitiges Extrudieren der Rohgummimischungen in demselben Extruder (23) hergestellt ist; und
eine zwischen zwei weiteren Rohgummischichten angeordnete Rohgummizwischenschicht aus recyceltem Rohgummi angeordnet ist.

## Revendications

1. Procédé de production d'une bande de roulement de pneumatique (4) dotée de barrettes (6) ;
la bande de roulement (4) comprenant une base de bande de roulement (5) ; et un certain nombre de barrettes (6), dont chacune fait saillie vers le haut à partir de la base de bande de roulement (5) et a une partie latérale (8) située au niveau d'un épaulement du pneumatique (1) et une partie centrale (9) située dans la zone centrale du pneumatique (1) ;
le procédé comprenant les étapes consistant à :
préparer une ébauche de bande de roulement en caoutchouc cru (13) ;
appliquer des blocs de caoutchouc cru (15) aux zones de l'ébauche de bande de roulement (13) où les barrettes (6) doivent être formées, chaque bloc comportant une paroi externe (19) située au niveau d'un épaulement de l'ébauche de bande de roulement (13) et une paroi interne (20) opposée à la paroi externe (19) et située dans la zone centrale de l'ébauche de bande de roulement (13) ; et
durcir l'ébauche de bande de roulement (13), conjointement avec les blocs (15), dans un moule de durcissement (17) reproduisant en négatif le dessin de la bande de roulement (4) ;
le procédé étant **caractérisé en ce que** :
chaque bloc (15) est fabriqué à partir d'au moins trois couches de composés de caoutchouc cru différents, par coextrusion des composés de caoutchouc cru dans la même extrudeuse (23) ; et
une couche de caoutchouc cru intermédiaire entre deux autres couches de caoutchouc cru est constituée de caoutchouc cru recyclé.

2. Procédé selon la revendication 1, dans lequel :
une partie supérieure principale de chaque bloc (15) est fabriquée à partir d'un premier composé de caoutchouc (29) ; et
une partie inférieure, venant en contact avec l'ébauche de bande de roulement (13) en dessous, de chaque bloc (15) est fabriquée à partir d'un deuxième composé de caoutchouc (30) conçu pour adhérer fermement au composé de caoutchouc de l'ébauche de bande de roulement (13).

3. Procédé selon la revendication 2, dans lequel le premier composé de caoutchouc (29) est plus dur que le deuxième composé de caoutchouc (30).

4. Procédé selon la revendication 2 ou 3, dans lequel le premier composé de caoutchouc (29) est optimisé pour obtenir des barrettes (6) avec les caractéristiques mécaniques et de résistance à l'usure nécessaires.

5. Procédé selon la revendication 2, 3 ou 4, dans lequel le deuxième composé de caoutchouc (30) est optimisé pour maximiser l'adhérence au composé de caoutchouc de l'ébauche de bande de roulement (13).

6. Procédé selon l'une quelconque des revendications 1 à 5, dans lequel chaque bloc (15) a au moins une languette de fixation (26), qui repose sur l'ébauche de bande de roulement (13) et est fabriquée à partir du deuxième composé de caoutchouc (30).

7. Procédé selon la revendication 6, dans lequel chaque bloc (15) a deux languettes de fixation (26) situées sur des côtés opposés du bloc (15).

8. Procédé selon l'une quelconque des revendications 1 à 7 et comprenant l'étape supplémentaire consistant à déposer d'abord une colle liquide entre une surface inférieure de chaque bloc (15) et une surface supérieure de l'ébauche de bande de roulement (13), avant que chaque bloc (15) soit appliqué à l'ébauche de bande de roulement (13).

9. Procédé selon l'une quelconque des revendications 1 à 8 et comprenant l'étape supplémentaire consistant à chauffer d'abord une surface inférieure du bloc (15) et/ou une surface supérieure de l'ébauche de bande de roulement (13), avant que chaque bloc (15) soit appliqué à l'ébauche de bande de roulement (13).

10. Procédé selon l'une quelconque des revendications 1 à 9, dans lequel, à l'intérieur de chaque bloc (15), la bordure entre les différents composés de caoutchouc cru est définie par une surface plane.

11. Procédé selon l'une quelconque des revendications 1 à 10, dans lequel les couches de composés de caoutchouc cru dans chaque bloc (15) diminuent en viscosité vers l'extérieur.

12. Système (10) pour fabriquer une bande de roulement de pneumatique (4) avec des barrettes (6) ;
la bande de roulement (4) comprend une base de bande de roulement (5) ; et un certain nombre de barrettes (6), dont chacune fait saillie vers le haut à partir de la base de bande de roulement (5) et a une partie latérale (8) située au niveau d'un épaulement du pneumatique (1) et une partie centrale (9) située dans la zone centrale du pneumatique (1) ;
le système (10) comprenant :
un dispositif de formation (22) pour former une ébauche de bande de roulement en caoutchouc cru (13) ;
une unité (14) destinée à appliquer des blocs de caoutchouc cru (15) aux zones de l'ébauche de bande de roulement (13) où les barrettes (6) doivent être formées, chaque bloc comportant une paroi externe (19) située au niveau d'un épaulement de l'ébauche de bande de roulement (13) et une paroi interne (20) opposée à la paroi externe (19) et située dans la zone centrale de l'ébauche de bande de roulement (13) ; et
une unité de durcissement (16) destinée à durcir l'ébauche (13) de bande de roulement, conjointement avec les blocs (15), dans un moule de durcissement (17) reproduisant en négatif le dessin de la bande de roulement (4) ;
le système (10) étant **caractérisé en ce qu'**il comprend une extrudeuse (23) qui est configurée de telle sorte que
chaque bloc (15) soit fabriqué à partir d'au moins trois couches de composés de caoutchouc cru différents, par co-extrusion des composés de caoutchouc cru dans la même extrudeuse (23) ; et
une couche de caoutchouc cru intermédiaire entre deux autres couches de caoutchouc cru soit constituée de caoutchouc cru recyclé.
